Europäisches Patentamt

European Patent Office

Office européen des brevets

(11) Publication number: **0 046 529**
**A1**

## (12) EUROPEAN PATENT APPLICATION

(21) Application number: **81106175.3**

(22) Date of filing: **06.08.81**

(51) Int. Cl.³: **G 01 N 3/42**
**G 01 B 11/28**

(30) Priority: **26.08.80 IT 6831780**

(43) Date of publication of application:
**03.03.82 Bulletin 82/9**

(84) Designated Contracting States:
**CH DE FR GB LI**

(71) Applicant: **RIV-SKF OFFICINE DI VILLAR PEROSA S.p.A**
**Via Mazzini 53**
**I-10123 Torino(IT)**

(72) Inventor: **Borio, Sergio**
**Via Zaglione 7**
**I-10100 Torino(IT)**

(74) Representative: **Bongiovanni, Guido et al,**
**c/o Ingg. Carlo e Mario Torta Via Viotti 9**
**I-10121 Torino(IT)**

(54) **Reader device for reading the impressions obtained during hardness tests according to the Vickers method.**

(57) A reader device for reading the impression (4) obtained on a surface (3) of a specimen (2) during a hardness test carried out according to the Vickers method.

The most important characteristic of the device consists in that it comprises lighting means (6, 7, 8) for the illumination of the said surface (3); at least a photoelectrical transducer (15); and focusing means (10) which convey onto a sensitive surface (14) of the said photoelectrical transducer (15) the beam of light coming from a region (18) of the said surface (3) within which the said impression (4) is contained.

Fig.1

EP 0 046 529 A1

Croydon Printing Company Ltd.

1

# READER DEVICE FOR READING THE IMPRESSIONS OBTAINED DURING HARDNESS TESTS ACCORDING TO THE VICKERS METHOD.

.-.-.-.-.-.

The present invention relates to a reader device for reading the impressions obtained during hardness tests carried out according to the Vickers method.

As is known, the valuation of the hardness of a material according to the Vickers method is carried out by measuring the length of the diagonals

2

of the impression which a pyramid-shaped penetrator forms on the surface of a specimen under the action of a test force of predetermined value.

At present time, for the valuation of the dimensions of the impression optical measuring devices are used which are substantially formed by a microscope provided with a webbed eyepiece.

The operator focuses the region of the impression and by means of the said web determines the length of each diagonal; from this length the operator determines than the value of the hardness in Vickers units by means of a known formula.

All the devices which are available on the market at present time are substantially based on the above principle, and although being widely used they have some disadvantages which limit the precision of the measurement.

In particular, since the valuation of the length of the diagonals by comparison with the units indicated on the web is somewhat subjective, and since the Vickers hardness coefficient depends in an inversely proportional way on the square of the length of the said diagonals, a minimun error of valuation is sufficient to give rise

.3

to great variations of said coefficient.Furthermore, once the length of the diagonals has been measured, it is also necessary to calculate or consult particular conversion tables, so that, as a result, it is necessary to have a specialized personnel to carry out in a substantially continuous way the measurement of the hardness according to the Vickers method, in order to obtain substantially homogeneous results.

It is an object of the present invention to provide a reader device for reading the impressions generated by hardness tests according to the Vickers method, which device will be substantially free from the mentioned disadvantages of the known devices.

This object is attained according to the present invention which relates to a reader device for reading an impression formed on a surface of a specimen during a hardness test carried out in accordance with the Vickers method, characterized in that it comprises lighting means for the illumination of the said surface; at least a photoelectrical transducer; and focusing means which convey onto a sensitive surface of the said photoelectrical transducer the beam of light coming from a region of the said surface containing the said impression.

4

For a better understanding of the present invention a preferred embodiment thereof will now be described by way of non limiting example, with reference to the annexed drawing, in which:

FIGURE 1 is a diagrammatic view showing a reader device according to the teachings of the present invention; and

FIGURE 2 shows a portion of a surface of a specimen on which surface an impression has been formed according to the Vickers method.

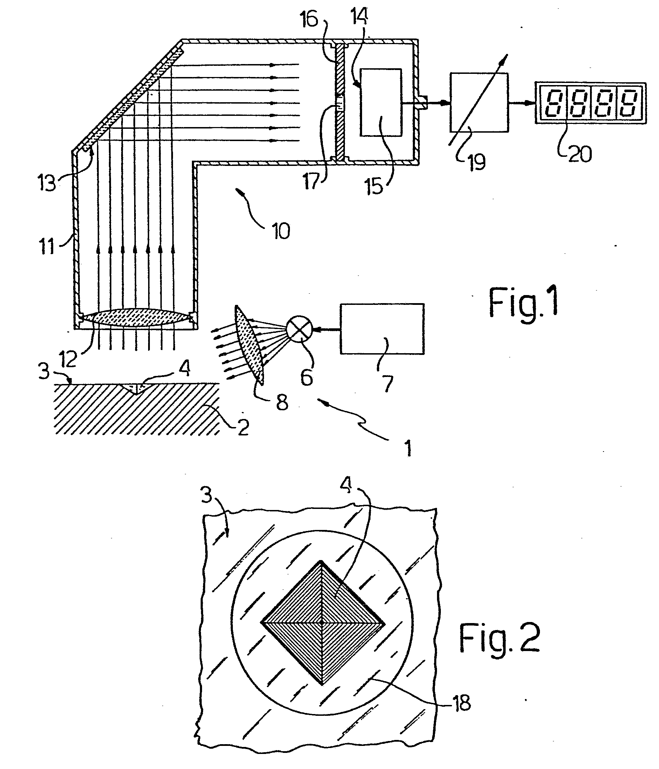

Referring now particularly to Fig. 1, reference numeral 1 indicates generally an impression reader device formed in accordance with the teachings of the present invention, and reference numeral 2 indicates a portion, shown in a cross-sectional view, of a specimen having on its upper surface 3 an impression 4 obtained by means of a penetrator (not shown)    in accordance with the Vickers method.

The device 1 comprises an illumination assembly formed by a lamp 4, a stabilized feeder 7 which supplies a continuous feeding voltage to the lamp 6, and a lens 8 interposed between the lamp 6 and the surface 3 of the specimen 2. In addition, device 1 comprises a focalisation unit 10 formed substantially by an elbow-bent tube 11

5

which supports a lens 12 at its end facing the surface 3 of the specimen 2. Supported inside the tube 11 is a plane reflecting layer 13 arranged to convey the beam of light onto a sensitive surface 14 of a photoelectric transducer 15 which is mounted within the tube 11 at the end thereof which is opposed to the end supporting the lens 12. Disposed in front of the surface 14 is a mask 16 having a through hole 17 which allows only a part of the beam of light reflected by the surface 3 to strike the surface 14. In particular, referring to Fig. 2, the tube 11 will have to be positioned relative to the specimen 2 in such a way that through the through hole 17 will be focalised a region 18 of the surface 3 within which the impression 4 is contained.

The signal generated by the photoelectrical transducer 15 is supplied to an amplifier 19 having a transmission function whoose behaviour in amplitude compensates an eventual response non-linearity from the photoelectrical transducer 15 which, by way of example, could be formed by a phototransistor or a photodiode. Amplifier 19, which is apt to supply to its own output a signal proportional to the value of the hardness coefficient according to the Vickers method, feeds a digital display of the type with

6

seven segments, on which the said coefficient may be directly read.

In a way not shown in Fig. 1, a suitable eyepiece may be disposed at the side of the photoelectrical transducer 15, in order to verify whether through the hole 17 is really visible the region 18 within which the impression 4 is formed.

The reading of the impression 4 which allows to valuate the Vickers hardness coefficient is preferably preceded by a phase of calibration of the device 1, during which on the sensitive surface 14 of the photoelectrical transducer 15 there is focalised the region of the surface 3 in which the impression 4 will be formed later. Since the surface 3 of the specimen has been conveniently polished, this region uniformly reflects the beam of light emitted by the lamp 6, so that the beam of light uniformly strikes the surface 14 of the photoelectrical transducer 15 causing this latter to emit an electric signal of maximum amplitude value. Under these circumstances the amplifier 19 is adjusted in such a way that the output signal generated by the amplifier and transmitted to the digital display 20 will determine at the output of this latter a reference or sero signal.

7

In a successive phase, the tube 11 is positionzd relative to the specimen 2 in such a way that the region 18 of the surface 3 of the specimen is centered or anyway within the through hole 17 of the mask 16. Under these circumstances, the photoelectrical transducer 15 is inserted,whoose surface 14, receiving less rays of light than in the preceding case because a portion of the region 18 is no more reflecting now owing to the presence of the impression 4, emits an electric signal having a smaller amplitude than in the preceding case. This signal, multiplied by a pre-established coefficient within the amplifier 19 is supplied to the digital display 20, on which one can directly read the hardness coefficient according to the Vickers method. In fact, the signal which is supplied by the photoelectrical transducer 15 is porportional to the ratio between the square region defined by the impression 4 (see Fig. 2) and the entire region 18 defined by the through hole 17 of the mask 16. Since the region 18 has a constant surface whilst the region defined by the impression 4 has an area proportional to the square of the diagonals, the output signal of the photoelectrical transducer 15 may be directly utilized for the calculation of the hardness according to the

8

Vickers method.

From the analysis of the charcateristics of the device 1 conceived in accordance with the theachings of the present invention it may be noted that this device allows to overcome the disadvantages mentioned hereinabove of the known devices.

In fact, the valuation of the impression 4 is now completely independent from valuations of subjective type; furthermore, by suitably dimensioning the amplification curve as a function of the amplitude of the amplifier 19 it will every time be possible to directly read on the digital display the value of the hardness coefficient according to the method of Vickers, without having to carry out any calculation or to consult conversion tables.

Finally, it is clear that modifications and variations may be made to the described embodiment of the device 1 constructed according to the teachings of present ibvention, without departing from the scope of the invention itself.

9

# C L A I M S

1. - A reader device for reading an impression (4) formed on a surface (3) of a specimen (2) during a hardness test carried out according to the Vickers method, characterized in that it comprises lighting means (6, 7, 8) for the illumination of the said surface (3); at least a photoelectrical transducer (15); and focusing means (10) which convey onto a sensitive surface (14) of the said photoelectrical transducer (15) the beam of light coming from a region (18) of the said surface (3) within which the said impression (4) is contained.

2. - A device as claimed in Claim 1, characterized in that it comprises means (19) for processing the electric signal generated by the said photoelectrical transducer (15), and display means (20) to which an output signal of the said processing means (19) is supplied.

3. - A device as claimed in Claim 2, characterized in that the said output signal supplied by the said processing means (19) is apt to determine in the said display means (20) an indication proportional to the Vickers hardness coefficient.

10

4. - A device as claimed in at least one of the preceding Claims, characterized in that the said lighting means comprise a lamp (6) and a stabilized feeder (7) which supplies to the said lamp (6) a continuous type current.

5. - A device as claimed in at least one of the preceding Claims, characterized in that the said focusing means (10) comprise a mask (16) disposed in front of a sensitive surface (14) of the said photoelectrical transducer (15), the said mask (16) being provided with a through hole (17) which allows only the rays of light coming from a predetermined region (18) of the said surface of the said specimen (2) to strike the said sensitive surface (14) of the said photoelectrical transducer (15).

- 1/ -

Fig.1

Fig.2

# EUROPEAN SEARCH REPORT

European Patent Office

Application number

EP 81 10 6175

## DOCUMENTS CONSIDERED TO BE RELEVANT

| Category | Citation of document with indication, where appropriate, of relevant passages | Relevant to claim |
|---|---|---|
| X | FR - A - 2 410 267 (VICKERS LIMITED)<br><br>* Page 18, line 12 - page 20, line 5, page 23, lines 2-34; page 25, lines 9-17; page 27, lines 11-18; figures 2,6a,7 * | 1-4 |
| P | & US - A - 4 222 262 | |
| | -- | |
| | US - A - 4 147 052 (JUNPEI TSU-JIUCHI et al.)<br><br>* Column 2, line 47 - column 3, line 11; column 3, lines 35-47; figure 3 * | 1,2,4 |
| | -- | |
| | US - A - 3 822 946 (G.A. RYNKOWSKI)<br><br>* Column 4, lines 33-52; column 5, line 63 - column 6, line 6; column 7, lines 4-9; figure 1 * | 1,2 |
| | -- | |
| | DE - A - 2 331 124  (S. REINIGER)<br>* Page 2, paragraph 1; figure 1 * | 1,2,4 |
| | -- | |
| | OPTIK, vol. 37, no. 1, January 1973<br>Stuttgart, DE<br>S. REINIGER: "Photometrisches Messen von Vickers-Härteeindrücken", pages 8-14<br><br>* Paragraph 2; figure 2 * | 1,2,4 |
| | --                    ./. | |

**CLASSIFICATION OF THE APPLICATION (Int. Cl.³)**

G 01 N   3/42
G 01 B  11/28

**TECHNICAL FIELDS SEARCHED (Int. Cl.³)**

G 01 N   3/42
             3/44
             3/40
G 01 B  11/28
            11/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-12-1981 | KEMPIN |

EPO Form 1503.1   06.78

**European Patent Office**

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | US - A - 2 713 259 (P. GRODZINSKI et al.)<br>* Column 4, lines 41-59; figures 1,3 *<br>---- | 1,4 | |
| | | | **TECHNICAL FIELDS SEARCHED (Int. Cl.³)** |

EPO Form 1503.2   06.78